# EUROPÄISCHE PATENTSCHRIFT

(11) **EP 0 978 775 B1**
(45) Veröffentlichungstag und Bekanntmachung des Hinweises auf die Patenterteilung: **14.01.2004**
(21) Anmeldenummer: 99113908.0
(22) Anmeldetag: 16.07.1999
(51) Int. Cl.: G05B 19/409

(54) **Verfahren zur sicheren Datenübertragung zwischen einer numerischen Steuerung und einem räumlich getrennten Gerät**
Method for faultfree data transmission between a numerical controller and a remotely separated device
Méthode de transmission sûre de données entre une commande numérique et un appareil à distance

(30) Priorität: 01.08.1998 DE 19834863
(43) Veröffentlichungstag der Anmeldung: 09.02.2000
(73) Patentinhaber: Dr. Johannes Heidenhain GmbH, 83292 Traunreut (DE)
(72) Erfinder: Kranitzky, Walter, Dr., 83278 Traunstein (DE)

(56) Entgegenhaltungen:
- EP-A- 0 352 759
- EP-A- 0 399 308
- EP-A- 0 742 500
- EP-A- 0 742 505

## Beschreibung

Die Erfindung betrifft ein Verfahren zur sicheren Datenübertragung zwischen einer numerischen Steuerung und einem räumlich getrennten Gerät nach dem Oberbegriff des Anspruchs 1.

Aus dem deutschen Gebrauchsmuster G 82 36 366.8 ist bekannt, daß Werkzeugmaschinen zusätzlich zu einer Bedientafel eine zusätzliche mobile Hand-Vorschubeinrichtung für spezielle Funktionen aufweisen können. Zu der Bedientafel gehört meist auch eine Anzeigeeinrichtung, so daß der Benutzer dort alle Funktionen der Steuerung der Maschine auslösen und überwachen kann. Die mobile Hand-Vorschubeinrichtung wird auch als elektronisches Handrad bezeichnet und ermöglicht es dem Benutzer, daß er beispielsweise den Vorschub für eine oder mehrere Maschinenachsen nicht nur wenn er an der Bedientafel steht, sondern auch wenn er sich an einer weitgehend beliebigen Stelle befindet, eingeben kann. Um dies zu ermöglichen, weist die mobile Hand-Vorschubeinrichtung verschiedene Tasten, beispielsweise zur Auswahl einer Achse, und einen Drehgeber zur Realisierung eines Handrades auf. Die Verbindung zwischen Hand-Vorschubeinrichtung und Steuerung erfolgt dabei über ein Kabel, das die zur Signalübertragung benötigten Leitungen aufweist.

Ein Verfahren zur sicheren Übertragung von Eingabedaten von der Hand-Vorschubeinrichtung an die Steuerung wird dabei nicht offenbart.

Aus der DE 297 10 026 ist eine numerische Steuerung mit einem räumlich getrennten Bediengerät bekannt, das ein Handrad zur Eingabe von Stellbefehlen aufweist. Die Übertragung der Stellbefehle von dem räumlich getrennten Bediengerät an die Steuerung erfolgt dabei in einem festen Zeitraster mittels einer drahtlosen Übertragungseinrichtung gemäß dem DECT-Standard. Eine mechanische Verbindung zwischen Steuerung und Bediengerät, beispielsweise mittels eines Kabels, besteht nicht.

Diese Ausführungsform weist den Nachteil auf, daß sie besonders leicht durch die in einer Maschinenhalle vorhandenen elektromagnetischen Felder gestört werden kann. Bei Benutzung des Bediengeräts besteht daher permanent die Gefahr der Fehlfunktion der Maschine nicht nur aufgrund des Versagens von elektrischen Baugruppen, sondern zusätzlich aufgrund von Störungen der Funkübertragung.

Bezüglich der Anforderungen an fehlersichere Systeme, insbesondere Steuerungen, existieren bereits verschiedene Richtlinien. In der EN 954-1 ist festgelegt, daß ein fehlersicheres System der Kategorie 3 durch einen einzelnen Fehler nicht in einen unsicheren Betriebszustand wechselt, sondern trotz des Fehlers weiterhin ein sicheres System bleibt.

Weist das System ein von der Steuerung getrennt angeordnetes Eingabegerät auf, so ist auch die Datenübertragung zwischen der Steuerung und dem Eingabegerät gemäß einem sicheren Übertragungsverfahren auszugestalten, um insgesamt ein sicheres System zu realisieren. Dafür wurden bisher mehrere Übertragungsverfahren benutzt. Bei einem möglichen sicheren Übertragungsverfahren werden die in der Steuerung empfangenen Eingabedaten wieder an das Eingabegerät zurückübertragen und dort mit den ursprünglich an die Steuerung gesendeten Eingabedaten verglichen. Wird dabei Übereinstimmung erkannt, ist bei der Übertragung kein Fehler aufgetreten; wird keine Übereinstimmung erkannt, muß dies durch das Eingabegerät der Steuerung mitgeteilt werden, wofür eine erneute Datenübertragung erforderlich wird.

Dieses Verfahren weist den Nachteil auf, daß sowohl durch das Eingabegerät als auch durch die Steuerung Daten übertragen werden müssen, weshalb sowohl im Eingabegerät als auch in der Steuerung Sende-/Empfangsbaugruppen vorgesehen sein müssen. Weiterhin muß die Steuerung warten, bis durch das Eingabegerät sicher kein Fehler bezüglich der Eingabedaten mehr gemeldet wird. Dies führt zu einer Verzögerung bei der Abarbeitung der Eingabedaten. Weiter von Nachteil ist, daß bei einem Fehler, der erst bei der Rückübertragung der Eingabedaten von der Steuerung an das Eingabegerät aufgetreten ist, ebenfalls eine fehlerhaft Übertragung vom Eingabegerät an die Steuerung erkannt und eine Fehlerbehandlung ausgelöst wird.

Aus der EP 182 134 B1 ist ein Verfahren zum Betrieb eines signaltechnisch sicheren Mehrrechnersystems, insbesondere für das Eisenbahnsicherungswesen, bekannt. Sobald in diesem Mehrrechnersystem Störungen erkannt werden, werden sogenannte Langtelegramme für den Datenaustausch zwischen Rechnern übertragen. Diese Langtelegramme zeichnen sich dadurch aus, daß sie aus je zwei inhaltlich gleichen Telegrammen üblicher Länge bestehen und über bisher nicht als gestört erkannte Übertragungskanäle übertragen werden. Dadurch wird eine höherredundante Datenübertragung erreicht. Dabei kann eines der beiden üblichen Telegramme invertiert übertragen werden.

Dieses Verfahren weist den Nachteil auf, daß ein Langtelegramm von einem einzigen Rechner gebildet und übertragen wird. Dadurch ist es nicht möglich Störungen eines Rechners zu erkennen.

Aus der EP 742 500 A2 sind sichere Tipptasten- und Schalterfunktionen bekannt. Die Signale sicherheitsrelevanter Tipptasten werden dabei in Eingangsbausteinen mit einer Signatur versehen und von einem Prozessor der Senderseite zu einem Empfänger übertragen. Ein Prüfung auf Plausibilität der Signale findet dann erst auf der Empfängerseite statt. Interpretiert bereits der Prozessor der Senderseite die Signale der Tipptasten falsch, kann dies auf der Empfängerseite nicht erkannt werden.

Aus der EP 742 505 A2 ist eine Einrichtung zum sicherheitsgerichteten Überwachen einer Maschine bekannt. Es werden die Zustandsparameter einer Maschine getrennt eingeb-, speicher- und ausgebbar gehalten. Dies erfordert aber einen erheblichen Aufwand. Insbesondere die Übertragung der Sensordaten an die Steuerung muß über getrennte, also mehrfach ausgeführte Leitungen erfolgen.

Aufgabe der vorliegenden Erfindung ist es daher, ein Verfahren für eine möglichst schnelle Datenübertragung anzugeben, bei dem möglichst wenig zusätzlicher Aufwand erforderlich ist, um die Datenübertragung zwischen Steuerung und Gerät sicher auszugestalten.

Diese Aufgabe wird durch ein Verfahren mit den im Anspruch 1 angegebenen Merkmalen gelöst.

Weiterbildungen und vorteilhafte Ausgestaltungen des erfindungsgemäßen Verfahrens sind den jeweils abhängigen Ansprüchen zu entnehmen.

Das erfindungsgemäße Verfahren weist den Vorteil auf, daß auf besonders einfache Weise eine sichere Datenübertragung zwischen Eingabegerät und Steuerung realisiert wird. Es werden, aufgrund der Eingaben durch den Benutzer, die ohnehin von beiden Prozessoren des Eingabegeräts unabhängig voneinander ermittelten Nachrichten unterschiedlich codiert und nacheinander an die Steuerung übertragen. In der Steuerung werden ohnehin vorhandene Datenübertragungswege benutzt, ohne daß dabei die Gefahr einer unzulässigen Veränderung der Übertragungsdaten besteht. Eine besonders große Fehlersicherheit wird vorteilhaft dann erreicht, wenn zur Codierung der Nachrichten Fehlersicherungscodes verwendet werden.

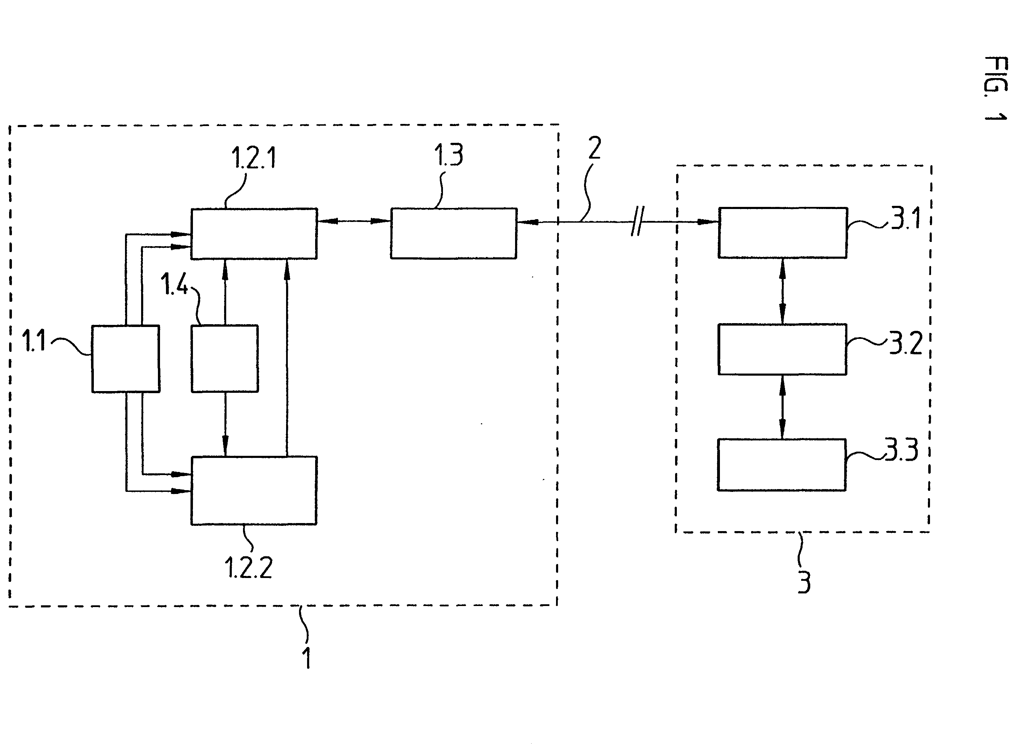

Die Erfindung wird im folgenden anhand der in der Zeichnung dargestellten Ausführungsformen näher erläutert. Die Figur zeigt ein mögliches Eingabegerät, welches Benutzereingaben an eine Steuerung überträgt.

Die Erfindung soll im folgenden anhand eines Ausführungsbeispiels erläutert werden, bei dem das räumlich entfernte Gerät durch ein Eingabegerät 1 realisiert wird. Die Figur zeigt eine mögliche schaltungstechnische Realisierung des Eingabegeräts 1. Ein erster Prozessor 1.2.1 ist mit einem Drehgeber 1.1 und weiteren Eingabebaugruppen wie einer Ein-/Ausgabe-Anordnung 1.4, die einen Not-Aus-Taster beinhalten kann, und einer Schnittstelle 1.3 verbunden. Weiterhin ist ein zweiter Prozessor 1.2.2 vorgesehen, der ebenfalls mit dem Drehgeber 1.1, der Ein-/Ausgabe-Anordnung 1.4 und mit dem ersten Prozessor 1.2.1 verbunden ist. Die Schnittstelle 1.3 ist zusätzlich über eine Leitung 2 mit einer Steuerung 3 verbunden. Die Steuerung 3 besteht aus einem ersten Prozessor 3.1, einem zweiten Prozessor 3.3 und einem für die beiden Prozessoren 3.1 und 3.3 gemeinsamen Speicher 3.2.

Die Ein-/Ausgabe-Anordnung 1.4 weist eine Reihe von Tastern, insbesondere einen Not-Aus-Taster, und Schalter auf, damit erforderliche Benutzereingaben durchgeführt werden können. Weiterhin weist diese Baugruppe optische und/oder akustische Signalisierungsmittel, wie beispielsweise Leuchtdioden, einen Bildschirm und/oder eine Sprachausgabe, auf, die dem Benutzer die Eingaben quittieren oder ausgewählte Betriebszustände anzeigen. Werden auch Betriebszustände der Steuerung 3 angezeigt, sind entsprechende Baugruppen für eine Datenübertragung von der Steuerung 3 an das Eingabegerät 1 vorzusehen.

Weiterhin ist ein Handrad mit einem Drehgeber 1.1 für die Eingabe von Befehlssignalen durch den Benutzer vorgesehen. Durch das Handrad 1.1 werden bevorzugt Achsbewegungen der gesteuerten Maschine eingegeben.

Im Betrieb werden alle Eingaben des Benutzers, beispielsweise über den Drehgeber 1.1 und die Ein-/Ausgabe-Anordnung 1.4, den beiden Prozessoren 1.2.1 und 1.2.2 zugeleitet und durch beide Prozessoren 1.2.1 und 1.2.2 auf Übereinstimmung überprüft. Dadurch wird mittels einer wechselseitigen Überwachung der beiden Prozessoren 1.2.1 und 1.2.2 eine erhöhte Betriebssicherheit erreicht.

Damit eine korrekte Verbindung zwischen der Steuerung 3 und dem Eingabegerät 1 überwacht und beispielsweise eine Störung im Verbindungskabel 2 ermittelt werden kann, ist die Anwendung verschiedener Maßnahmen zur Sicherstellung einer hohen Übertragungssicherheit möglich.

Erfindungsgemäß werden in beiden Prozessoren 1.2.1 und 1.2.2 die Ausgangssignale des Drehgebers 1.1 und der Ein-/Ausgabeanordnung 1.4 mittels unterschiedlicher Codierungsalgorithmen codiert. Dabei ist einem Prozessor immer nur ein Codierungsalgorithmus bekannt. Derart werden aus identischen Eingaben aufgrund der unterschiedlichen Codierungsalgorithmen durch die beiden Prozessoren 1.2.1 und 1.2.2 unterschiedliche digitale Übertragungsdaten erzeugt. Diese Übertragungsdaten werden in ein bestimmtes Übertragungsprotokoll eingefügt und über die Leitung 2 an die Steuerung 3 übertragen.

Als Codieralgorithmen können Algorithmen verwendet werden, die einen besonders gut verschlüsselten Code und/oder einen Code mit hoher Fehlersicherheit erzeugen. Als fehlersichere Codes können CRC-Codes, Hammingcodes oder einfache Quersummen verwendet werden. Diese bewirken in gewissem Maße auch eine Verschlüsselung.

Bei der Übertragung werden die Übertragungsdaten des Prozessors 1.2.2 an den Prozessor 1.2.1 gesendet und zusammen mit den Übertragungsdaten des Prozessors 1.2.1 über die Schnittstelle 1.3 und die Leitung 2 an den Prozessor 3.1 der Steuerung 3 übertragen. Der Prozessor 3.1 erkennt die für ihn bestimmten und die für Prozessor 3.3 bestimmten Übertragungsdaten.

Diese Erkennung kann beispielsweise aufgrund der Reihenfolge der Übertragungsdaten erfolgen. Hierfür wird festgelegt, daß die erste Hälfte der vom Prozessor 3.1 empfangenen Übertragungsdaten für Prozessor 3.3 bestimmt ist und die zweite Hälfte der empfangenen Übertragungsdaten für Prozessor 3.1 oder umgekehrt. Alternativ kann die Erkennung auch anhand einer Kennzeichnung von Übertragungsdaten erfolgen, die entweder von Prozessor 1.2.1 oder Prozessor 1.2.2 oder beiden Prozessoren im Eingabegerät 1 erfolgt ist. Auch dann leitet Prozessor 3.1 die für Prozessor 3.3 bestimmten Übertragungsdaten unverändert an diesen weiter.

In der Steuerung 3, welche die beiden Prozessoren 3.1 und 3.3 aufweist, ist in einem ersten Prozessor 3.1 ein erster Decodierungsalgorithmus gespeichert; in einem zweiten Prozessor 3.3 ist ein zweiter, unterschiedlicher Decodierungsalgorithmus gespeichert. Dabei wird durch den ersten Decodierungsalgorithmus die im ersten Prozessor 1.2.1 des Eingabegeräts 1 erfolgte Codierung und durch den zweiten Decodierungsalgorithmus die im zweiten Prozessor 1.2.2 des Eingabegeräts 1 erfolgte Codierung durch die Prozessoren 3.1 und 3.3 der Steuerung 3 wieder decodiert.

Dabei ist erfindungsgemäß einem ersten Prozessor 1.2.1 im Eingabegerät 1 ausschließlich ein erster Codierungsalgorithmus und einem ersten Prozessor 3.1 in der Steuerung 3 ausschließlich ein dazu inverser erster Decodierungsalgorithmus bekannt. Entsprechend ist einem zweiten Prozessor 1.2.2 im Eingabegerät 1 ausschließlich ein zweiter Codierungsalgorithmus und einem zweiten Prozessor 3.3 in der Steuerung 3 ausschließlich ein dazu inverser zweiter Decodierungsalgorithmus bekannt.

Nach der Decodierung der empfangenen Nachrichten vergleichen die beiden Prozessoren 3.1 und 3.3 der Steuerung 3 die empfangenen Eingaben des Benutzers auf Gleichheit. Dafür werden die Benutzereingaben über den gemeinsamen Speicher 3.2 ausgetauscht. Beide Prozessoren 3.1 und 3.3 schreiben hierfür die durch sie decodierten Übertragungsdaten in einen für jeden Prozessor individuellen Speicherbereich des gemeinsamen Speichers 3.2 und lesen anschließend aus dem anderen Speicherbereich des gemeinsamen Speichers 3.2 die durch den jeweils anderen Prozessor decodierten Übertragungsdaten aus. Dann werden in beiden Prozessoren 3.1 und 3.3 die aus dem Speicher 3.2 ausgelesenen mit den selbst decodierten Übertragungsdaten auf Gleichheit überprüft. Bei Ungleichheit wird ein Übertragungsfehler festgestellt. Dabei ist der Speicher 3.2 nicht zwingend erforderlich, alternativ können die decodierten Übertragungsdaten auch direkt zwischen den Prozessoren 3.1 und 3.3 ausgetauscht werden.

Wird ein Übertragungsfehler erkannt, wird durch die Steuerung 3 eine Fehlerbehandlung durchgeführt. Dabei werden alle Antriebe der Maschine zweikanalig durch die Prozessoren 3.1 und 3.3 stillgesetzt, so daß sich keine Komponente der Maschine mehr bewegen kann. Weiterhin wird an den Benutzer eine Fehlermeldung ausgegeben, die einen Hinweis auf die fehlerhafte Datenübertragung zwischen Eingabegerät 1 und Steuerung 3 gibt.

Alternativ oder ergänzend kann die beschriebene Art der sicheren Datenübertragung auch für eine Datenübertragung von anderen Baugruppen mit der Steuerung 3 benutzt werden. Dabei ist lediglich zu beachten, daß die mit der Steuerung kommunizierenden Baugruppen zwei unabhängige Prozessoren aufweisen müssen. Diese Bedingung ist aufgrund der zunehmend geforderten Fehlersicherheit von Steuerungen einschließlich ihrer Komponenten jedoch meist ohnehin erfüllt.

Anschließend erfolgt die Übertragung von Daten zwischen den Prozessoren 3.1 und 3.3 der Steuerung 3 und den zwei Prozessoren 1.2.1, 1.2.2 einer beliebigen Komponente der gesamten numerischen Steuerung wie bereits für das Eingabegerät 1 beschrieben.

## Patentansprüche

1. Verfahren zur sicheren Datenübertragung zwischen einer numerischen Steuerung und einem räumlich getrennten Gerät, insbesondere Eingabegerät (1), bei dem identische Nachrichten an mindestens zwei voneinander unabhängigen Prozessoren (1.2.1, 1.2.2) des Geräts (1) vorliegen, die Nachrichten anschließend in mindestens zwei Prozessoren (1.2.1, 1.2.2) des Geräts (1) mittels unterschiedlicher Codieralgorithmen codiert werden, die codierten Nachrichten der mindestens zwei Prozessoren (1.2.1, 1.2.2) an die Steuerung (3) übertragen werden, die codierten Nachrichten in der Steuerung mindestens zwei Prozessoren (3.1, 3.3) zugeleitet und in den beiden Prozessoren (3.1, 3.3) der Steuerung (3) unabhängig voneinander durch unterschiedliche, zu den Codieralgorithmen inversen Decodieralgorithmen decodiert werden, anschließend die decodierten Nachrichten auf Gleichheit überprüft werden und bei fehlender Gleichheit eine Fehlerbehandlung durchgeführt wird.

2. Verfahren nach Anspruch 1, **dadurch gekennzeichnet, daß** die Übertragung der durch die Prozessoren (1.2.1, 1.2.2) des Eingabegeräts (1) codierten Nachrichten über eine einzige Leitung (2) im Multiplex erfolgt.

3. Verfahren nach Anspruch 2, **dadurch gekennzeichnet, daß** für die Übertragung der Nachrichten an die Steuerung (3) ein Zeit-, Code- oder Frequenzmultiplex benutzt wird.

4. Verfahren nach einem der Ansprüche 1 bis 3, **dadurch gekennzeichnet, daß** bei der Übertragung die codierte Nachricht eines zweiten Prozessors (1.2.2) des Eingabegeräts (1) an einen ersten Prozessor (1.2.1) des Eingabegeräts (1) übertragen wird, daß von dem ersten Prozessor (1.2.1) beide codierte Nachrichten über die Schnittstelle (1.4) an die Steuerung (3) übertragen werden, daß beide codierte Nachrichten von einem ersten Prozessor (3.1) der Steuerung (3) empfangen werden und daß die für den zweiten Prozessor (3.3) der Steuerung (3) bestimmte Nachricht erkannt und an diesen zweiten Prozessor (3.3) weitergeleitet wird.

5. Verfahren nach Anspruch 4, **dadurch gekennzeichnet, daß** die erste oder zweite Hälfte der Übertragungsdaten als für den ersten oder zweiten Prozessor (3.3) bestimmte Nachricht erkannt wird oder daß durch einen oder beide Prozessoren (1.2.1, 1.2.2) des Eingabegeräts (1) die für den ersten und/oder zweiten Prozessor (3.1, 3.3) der Steuerung (3) bestimmte Nachricht **gekennzeichnet** wird.

6. Verfahren nach einem der Ansprüche 1 bis 5, **dadurch gekennzeichnet, daß** zur Codierung der Nachrichten in den Prozessoren (1.2.1, 1.2.2) ein Code zur Verschlüsselung und/oder zur Fehlersicherung benutzt wird.

7. Verfahren nach Anspruch 6, **dadurch gekennzeichnet, daß** ein CRC-Code, Hammingcode oder eine Quersumme benutz wird.

8. Verfahren nach einem der Ansprüche 1 bis 7, **dadurch gekennzeichnet, daß** bei einer Fehlerbehandlung eine zweikanalige Abschaltung der Werkzeugmaschine durch beide Prozessoren (3.1, 3.3) der Steuerung (3) erfolgt und an den Benutzer eine Fehlermeldung ausgegeben wird.

9. Verwendung des Verfahrens nach einem der Ansprüche 1 bis 8 , **dadurch gekennzeichnet, daß** es für die sichere Datenübertragung zwischen einer Komponente einer Steuerung (1), welche zwei unabhängige Prozessoren (1.2.1, 1.2.2) aufweist, und den Prozessoren (3.1, 3.3) der Steuerung (3) verwendet wird.

## Claims

1. Method for providing fail-safe data transmission between a numerical control system and a spatially separate unit, in particular an input unit (1), where identical messages are present at at least two processors (1.2.1, 1.2.2) of the unit (1), which are independent of one another; the messages are subsequently encoded in at least two processors (1.2.1, 1.2.2) of the unit (1) using various encoding algorithms; the encoded messages. of the at least two processors (1.2.1, 1.2.2) are transmitted to the control (3), the encoded messages in the control are fed to at least two processors (3.1, 3.3) and decoded in the two processors (3.1, 3.3) of the control (3), independently of one another, using various decoding algorithms, which are the inverse of the encoding algorithms; the decoded messages being subsequently checked for parity, and in response to non-parity, an error routine being executed.

2. Method according to claim 1, **characterised in that** the messages encoded by the processors (1.2.1, 1.2.2) of the input unit (1) are transmitted over one single line (2) in multiplex operation.

3. Method according to claim 2, **characterised in that** a time-, code-, or frequency-multiplex operation is used for transmitting the messages to the control (3).

4. Method according to one of claims 1 to 3, **characterised in that** during transmission, the encoded message of a second processor (1.2.2) of the input unit (1) is transmitted to a first processor (1.2.1) of the input unit (1); **in that** both encoded messages are transmitted by the first processor (1.2.1) via the interface (1.3) to the control (3); **in that** both encoded messages are received by a first processor (3.1) of the control (3); and **in that** the message intended for the second processor (3.3) of the control (3) is recognised and routed to this second processor (3.3).

5. Method according to claim 4, **characterised in that** the first or second half of the transmission data is recognised as a message intended for the first or second processor (3.3); or **in that** the message intended for the first and/or second processor (3.1, 3.3) of the control (3) is identified by one or both processors (1.2.1, 1.2.2) of the input unit (1).

6. Method according to one of claims 1 to 5, **characterised in that** an encryption and/or fail-safe code is used for encoding the messages in the processors (1.2.1, 1.2.2).

7. Method according to claim 6, **characterised in that** a CRC code, Hamming code, or horizontal check sum is used.

8. Method according to one of claims 1 to 7, **characterised in that** in the event of an error handling routine, the machine tool is shut down by both processors (3.1, 3.3) of the control (3), over two channels, and an error message is output to the user.

9. Application of the method according to one of claims 1 to 8, **characterised in that** it is used for the fail-safe data transmission between one component of a control (1), which has two independent processors (1.2.1, 1.2.2), and the processors (3.1, 3.3) of the control (3).

## Revendications

1. Procédé de transmission sûre de données entre une commande numérique et un appareil séparé de celle-ci dans l'espace, en particulier un appareil d'entrée de données (1), selon lequel des informations identiques sont transmises à au moins deux processeurs (1.2.1, 1.2.2) mutuellement indépendants de l'appareil (1), les informations sont ensuite codées dans au moins deux processeurs (1.2.1, 1.2.2) de l'appareil (1) à l'aide d'algorithmes de codage différents, les informations codées des processeurs (1.2.1, 1.2.2), au nombre d'au moins deux, sont transmises à la commande (3), les informations codées, dans la commande, sont transmises à au moins deux processeurs (3.1, 3.3) et sont décodées indépendamment l'une de l'autre à l'aide d'algorithmes de décodage différents, inverses des algorithmes de codage, dans les deux processeurs (3.1, 3.3) de la commande (3), à la suite de quoi les informations décodées sont comparées sur le plan de leur identité et en cas d'absence d'identité un traitement d'erreur est déclenché.

2. Procédé selon la revendication 1, **caractérisé en ce que** la transmission des informations codées par les deux processeurs (1.2.1, 1.2.2) de l'appareil d'entrée (1) sont transmises par l'intermédiaire d'une ligne (2) unique, en mode multiplex.

3. Procédé selon la revendication 2, **caractérisé en ce que** pour la transmission des informations à la commande (3), on utilise un multiplexage temporel, de code ou de fréquence.

4. Procédé selon une des revendications 1 à 3, **caractérisé en ce que** pour la transmission, l'information codée d'un deuxième processeur (1.2.2) de l'appareil d'entrée (1) est transmise à un premier processeur (1.2.1) de l'appareil d'entrée (1), **en ce que** les deux informations codées sont transmises à la commande (3) par le premier processeur (1.2.1) par l'intermédiaire d'une interface (1.4), **en ce que** les deux informations codées sont reçues par un premier processeur (3.1) de la commande (3) et **en ce que** l'information destinée au deuxième processeur (3.3) de la commande (3) est identifiée et transmise audit deuxième processeur (3.3).

5. Procédé selon la revendication 4, **caractérisé en ce que** la première ou la seconde moitié des données à transmettre est identifiée comme étant destinée au premier ou au deuxième processeur (3.3) ou **en ce que** l'information destinée au premier et/ou au deuxième processeur (3.1, 3.3) de la commande (3) est marquée par l'un ou les deux processeurs (1.2.1, 1.2.2) de l'appareil d'entrée (1).

6. Procédé selon une des revendications 1 à 5, **caractérisé en ce que** pour le codage des informations dans les processeurs (1.2.1, 1.2.2) on utilise un code pour le codage et/ou le contrôle d'erreurs.

7. Procédé selon la revendication 6, **caractérisé en ce qu'**on utilise un code CRC, un code de Hamming ou une somme des chiffres.

8. Procédé selon une des revendications 1 à 7, **caractérisé en ce que** pour un traitement d'erreur, une coupure bicanale de la machine-outil est initiée par les deux les deux processeurs (3.1, 3.3) de la commande (3) et un message d'erreur est délivré à l'opérateur.

9. Application du procédé selon une des revendications 1 à 8, **caractérisée en ce qu'**elle est utilisée pour la transmission sûre de données entre un composant d'un appareil d'entrée (1), qui comprend deux processeurs (1.2.1, 1.2.2, et les processeurs (3.1, 3.3) de la commande (3).
